# EUROPEAN PATENT APPLICATION

(11) **EP 4 148 595 A1**
(43) Date of publication of application: **15.03.2023**
(21) Application number: 22192051.5
(22) Date of filing: 25.08.2022
(51) Int. Cl.: G06F 16/38

(54) **PEER SEARCH METHOD AND SYSTEM**

(30) Priority: 13.09.2021 FI 20215960
(71) Applicant: Comparables Oy, 00100 Helsinki (FI)
(72) Inventor: VESALA, Markus, 00100 Helsinki (FI); AMMAD-UD-DIN, Muhammad, 02770 Espoo (FI); NALLI, Niko, 00160 Helsinki (FI); KANGASNIEMI, Martin, 20100 Turku (FI)
(74) Representative: Berggren Oy

(57) **Abstract**

The invention relates to a search method and system, in particular to a search method and system for identifying similar data objects ("peers") based on one of more input data objects. The system iteratively searches a global model and a database based on user feedback in order to identify similar data objects to the input data object(s).

## Description

### Technical Field

The invention relates to a search method and system, in particular to a search method and system for identifying similar data objects ("peers") based on one of more input data objects.

### Background

Standard search algorithms may be used to locate data objects, such as web pages, documents, database rows based on input search terms. Search terms typically include keywords and phrases for example. Other search algorithms, for example reverse image searches, may take a data object as an input and attempt to find the same or similar data objects within a database or other data collection.

### Summary

According to a first aspect of the invention, a computer-implemented method for identifying similar data objects is provided. The method comprises:
- receiving a query comprising at least one identifier corresponding to an input data object and one or more auxiliary search terms;
- identifying one or more primary peer data objects from a global data model, the primary peer data objects being relevant to the input data object;
- searching a database for one or more secondary peer data objects based on the query;
- providing the one or more primary and secondary peer data objects to a user interface;
- receiving user feedback from the user interface, the user feedback comprising an indication of the relevance of at least one of the one or more primary and secondary peer data objects to the input data object;
- searching the database and searching the global model for one or more tertiary peer data objects based on the received user feedback; and
- providing the one or more tertiary peer data objects to the user interface;
- wherein the steps of receiving user feedback, searching the database and global model and providing one or more tertiary peer data objects to the user interface are repeated until interrupted by user input or until no further user feedback is received.

According to a second aspect of the invention, a data processing system is provided. The data processing system comprises a processor configured to perform the method described above.

According a third aspect of the invention, a computer program is provided. The computer program comprises instructions which, when the program is executed by a computer, cause the computer to carry out the method.

According to a fourth aspect of the invention, a computer-readable medium is provided. The computer-readable medium comprises instructions which, when executed by a computer, cause the computer to carry out the method.

Further advantageous features of the invention are set out in the dependent claims.

### Brief Description of the Drawings

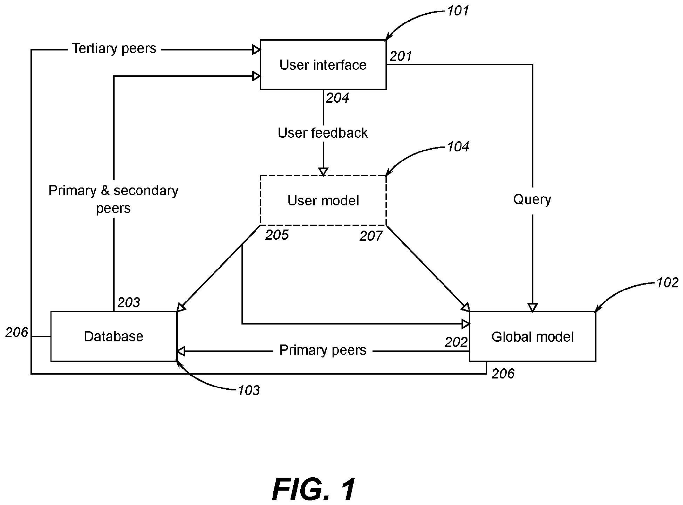

Figure 1 depicts the search system and method of present invention.

### Detailed Description

Figure 1 depicts the search system and method of present invention. The system includes a user interface 101, which may be a physical device such a computer, tablet or smartphone, or may be a software interface such as a standalone application or web page/web application. The user interface accepts input from the user and provides output to the user. The user interface 101 may communicate with the system back-end via a network such as the internet. As such, communication between the user interface 101 and the backend may pass through multiple intermediate devices such as network equipment.

The system back-end includes a global model 102, database 103 and, optionally, a user model 104. The global model 102, also referred to a global data model, is a knowledge graph in which nodes of the graph represent individual data objects and edges represent similarity between nodes. Each edge may denote the level of similarity between data objects represented by the connected nodes.

The database 103 may be a conventional database containing properties related to data objects such as associated keywords, descriptions, pre-computed numerical features and other similar information of the peers, such as textual and numerical features of the data objects and prior knowledge-based peer graphs, i.e. knowledge graphs based on prior knowledge such as classifications of the data objects. The specific form of the properties is dictated by the type of data object stored in the database and searched by the present system and method. For example, when the data objects are images, the properties may include size, format, colour and brightness statistics, for example.

The global model 102 and database 103 (and the user model 104) may be implemented on the same physical computer system, or may be distributed across multiple physical systems or the cloud. Communication between the system components 102-104 may take place over a network, such as the internet, if the components are distributed across multiple physical systems.

Furthermore, the individual back-end components 102-104 may not communicate directly with the user interface 101, for example where the user interface 101 is a web page or web application, a web server may also be present and act as an intermediary between the back-end components 102-104 and the user interface 101. Where communication between the back-end components 102-104 and the user interface 101 is described in this application, it will be appreciated that such an intermediary may be present. The system may also comprise a centralised coordinating component that directs the steps of the method described below. Alternatively, the logic for each of the step below may be built into the individual components 101-104.

The method of the present invention is illustrated by the arrows 201-207 connecting the components 101-104 of the system. At a first step 201, a query that includes at least one identifier corresponding to an input data object and one or more auxiliary search terms corresponding to the input data object is received via the user interface 101. The input data object is the data object for which similar data objects are desired. The identifier corresponding to the input data object may be a unique identifier such as a URI or may be a potentially non-unique identifier such as a name.

At step 202, one or more primary peer data objects are identified in the global model 102, the primary peer data objects being relevant to the input data object. The primary peer data objects may be those with a direct connection in the global model knowledge graph to the input data model. Alternatively, a higher degree of connection may be specified by the system.

At step 203, the primary peer data objects are used, along with the input data object and auxiliary search terms, to identify secondary peer data objects in the database. The primary peer data objects are passed, along with the query, to the database 103. The identification of secondary peer data objects may be performed by searching the database based on the properties of the input data object and primary peer data objects to identify further data objects with similar properties. Searching the database may use an NLP algorithm, statistical method and/or knowledge graph to optimize the search results.

The identified secondary peer data objects are passed, along with the primary peer data objects, to the user interface 101 where they are output to a user. The user provides feedback on the similarity of the secondary (and optionally primary) peer data objects to the input data object. The feedback may be in the form of upvotes, downvotes, clicks, positives or negatives, likes or dislikes, or may be a similarity value on a scale. User feedback may also be inferred from the interaction of the user with the presented peer data objects.

At step 204, user feedback is communicated from the user interface 101 to the user model 104. The user model may be a reinforcement learning model, multi-arm bandits method, contextual multi-arm bandits model, Bayesian Thompson sampling, epsilon-greedy and linear upper confidence bound method based on the data objects, data object properties and user feedback. The output of the user model 104 is used at step 205 to search the database and the global model for further, tertiary peer data objects.

At step 207, the user model or user feedback may be used to modify the global model, for example by creating connections or reinforcing existing connections between nodes for data objects that the user feedback indicates are similar. Where user feedback indicates that data objects are not similar and a connection currently exists, the connection may be adjusted or removed.

Where a user model 104 is not present, the user feedback may be communicated directly to the database 103 and/or global model 102.

Following the identification of tertiary peer data objects, the tertiary peer data objects are provided to the user interface 101, where further feedback may be provided. Thus, steps 204, 205, 206 and 207 form a loop that may be repeated as long as user feedback is provided at the user interface 101, with each loop further refining the results of the search process and improving the accuracy of the global model, which improves the results of future searches.

The process may also include predicting the relevance of at least one of the one or more peer data objects that have not received user feedback. The relevance may be predicted by searching the global model, semantically searching the database records using a NLP algorithm and transformer-based neural network model, searching the prior knowledge-based peer graphs or using a reinforcement learning model, where the inputs to the reinforcement learning model are contextual features of the data objects on which feedback has been received previously. The predicted relevance may also be weighted based on the method that was used to generate the prediction, with the highest weight being afforded to predictions based on the global model and each subsequent method mentioned above having a lower weight. Searching the database for one of more tertiary peer data objects may also be based on the predicted relevance of at least one of the one or more peer data objects that has not received user feedback.

## Claims

1. A computer-implemented method for identifying similar data objects, the method comprising:
receiving a query comprising at least one identifier corresponding to an input data object and one or more auxiliary search terms;
identifying one or more primary peer data objects from a global data model, the primary peer data objects being relevant to the input data object;
searching a database for one or more secondary peer data objects based on the query;
providing the one or more primary and secondary peer data objects to a user interface;
receiving user feedback from the user interface, the user feedback comprising an indication of the relevance of at least one of the one or more primary and secondary peer data objects to the input data object;
searching the database and searching the global model for one or more tertiary peer data objects based on the received user feedback; and
providing the one or more tertiary peer data objects to the user interface;
wherein the steps of receiving user feedback, searching the database and global model and providing one or more tertiary peer data objects to the user interface are repeated until interrupted by user input or until no further user feedback is received.

2. The method of claim 1, wherein the database comprises textual and numerical features of the peers and prior knowledge-based peer graphs.

3. The method of claim 2, wherein the method further comprises predicting the relevance of at least one of the one or more peer data objects that has not received user feedback, wherein predicting the relevance comprises one or more of:
searching the global model;
semantically searching the database records using a NLP algorithm and transformer encoder model;
searching the prior knowledge-based peer graphs; and
using a reinforcement learning model, where the inputs to the reinforcement learning model are contextual features of the data objects on which feedback has been received previously;
optionally wherein the predicted relevance is weighted according to the method used to predict the relevance.

4. The method of any preceding claim, wherein the global model is a knowledge graph in which nodes of the graph represent data objects and edges represent similarity between nodes, wherein each edge denotes the level of similarity between data objects represented by the connected nodes.

5. The method of claim 4, wherein identifying one or more primary peer data objects in a global data model comprises identifying one or more nodes in the knowledge graph connected to the at least one node that represents the at least one input data object.

6. The method of claim 4 or 55, wherein the method further comprises incorporating the user feedback into the global model by adding or reinforcing edges in the global model knowledge graph for primary and/or secondary peer data objects that received positive user feedback.

7. The method of any of claims 4 to 65, wherein the method further comprises incorporating the user feedback into the global model by removing or weakening edges in the global model knowledge graph for primary and/or secondary peer data objects that received negative user feedback.

8. The method of any of claims 2 to 7, wherein identifying one or more primary peer data objects in a prior knowledge-based peer graphs comprises identifying one or more nodes in the graphs connected to the at least one node that represents the at least one input data object.

9. The method of any of claims 2 to 85, wherein the method further comprises incorporating the user feedback into the prior knowledge-based peer-graphs by removing edges in the peer-graphs for primary and/or secondary peer data objects that has received a threshold of pre-defined number of negative user feedback.

10. The method of any preceding claim, wherein searching the database comprises employing a NLP algorithm, transformer neural network, statistical method and/or knowledge graph to optimize the search results.

11. The method of any preceding claim, wherein searching the database further comprises identifying data object properties of the primary and/or secondary peer data objects.

12. The method of claim 11, wherein searching the database and the global model for one or more tertiary peer data objects comprises generating a user model based on the user feedback, wherein searching the database for one or more tertiary peer data objects comprises searching for tertiary peer data objects based on data object properties of one or more of the primary, secondary and/or previously identified tertiary peer data objects, and wherein searching the global model for one or more tertiary peer data objects comprises searching the global model for data objects with connections to primary, secondary, and/or previously identified tertiary peer data objects that received user feedback;
optionally wherein the user model comprises of at least one of: a reinforcement learning model, multi-arm bandits method, contextual multi-arm bandits model, Bayesian Thompson sampling, epsilon-greedy and linear upper confidence bound method.

13. A data processing system comprising a processor configured to perform the method of any preceding claim.

14. A computer program comprising instructions which, when the program is executed by a computer, cause the computer to carry out the method of any preceding claim.

15. A computer-readable medium comprising instructions which, when executed by a computer, cause the computer to carry out the method of any preceding claim.
